# EUROPÄISCHE PATENTSCHRIFT

(11) **EP 1 195 300 B1**
(45) Veröffentlichungstag und Bekanntmachung des Hinweises auf die Patenterteilung: **10.11.2004**
(21) Anmeldenummer: 01120738.8
(22) Anmeldetag: 06.09.2001
(51) Int. Cl.: B60R 16/02, B60K 37/00

(54) **Verfahren und Vorrichtung zur Anzeige von Funktionen in einem Fahrzeug**
Method and apparatus for the display of functions in a motor vehicle
Procédé et appareil pour l'affichage des fonctions dans un véhicule automobile

(30) Priorität: 21.09.2000 DE 10046909
(43) Veröffentlichungstag der Anmeldung: 10.04.2002
(73) Patentinhaber: MAN Nutzfahrzeuge Aktiengesellschaft, 80995 München (DE)
(72) Erfinder: Spaderna, Josef, Dipl.-Ing., 85229 Markt Indersdorf (DE); Klostermeier, Michael, Dipl.-Ing., 82152 Martinsried (DE)

(56) Entgegenhaltungen:
- EP-A- 0 701 926
- WO-A-97/13657
- DE-A- 4 307 367
- US-A- 5 270 689

## Beschreibung

Die Erfindung betrifft eine Vorrichtung zur zentralen Anzeige von Funktionen in einem Fahrzeug nach dem Oberbegriff des Patentanspruches 1.

Eine derartige Vorrichtung ist aus EP-A-0 701 926 bekannt. Die bekannte Vorrichtung dient zur zentralen Anzeige von Funktionen in einem Fahrzeug, wobei diese Funktionen neben fahrzeugbezogenen Funktionen auch die Funktion Navigation enthält. In einem für den Fahrer sichtbar angeordneten Display werden zu den Funktionen gehörige Daten dargestellt. Mit einem vom Fahrer betätigbaren Bediensteller können ein Cursor am Display bewegt werden und die am Display dargestellten Daten angewählt werden. Dabei kann die am Display angeschlossene Navigationseinrichtung mittels des Bedienstellers bedient werden.

Bei einer aus der DE 196 04 351 A1 bekannten Vorrichtung werden neben fahrzeugbezogenen Funktionen noch zusätzliche Funktionen, wie Navigation, Radio, Telefon in einem im Fahrersichtfeld angeordneten Display durch Anwahl mittels entsprechender Funktionstasten am Display darstellbar. Am Display ist ein Cursor beweglich vorgesehen, der mittels eines vom Fahrer betätigbaren Bedienstellers zu bestimmten am Display dargestellten Daten bzw. mittels Symbolen oder Worten dargestellten Funktionen bewegbar ist. Zur Aktivierung bzw. Durchführung bestimmter Funktionen ist zusätzlich ein Joystick-Schalter vorgesehen, durch den die ausgewählte Funktion veranlasst werden kann.

Aufgabe der Erfindung ist es, eine Vorrichtung der eingangs genannten Art zu schaffen, bei welcher ein Verlust der Daten des Navigationssystems vermieden wird.

Diese Aufgabe wird erfindungsgemäß durch die kennzeichnenden Merkmale des Patentanspruches 1 gelöst. Hierzu wird eine Navigationseinrichtung an das Display und den Bediensteller angeschlossen. In bekannter Weise bestimmt die Navigationseinrichtung aus einem Tachometersignal, einem Fahrtrichtungssignal und dem GPS-Signal ihre jeweils aktuelle Position.

Die Navigationseinrichtung ist vorzugsweise durch den Betriebsstrom des Kraftfahrzeugs ein- und ausschaltbar, wobei das Ausschalten der Navigationseinrichtung für eine Datensicherung nach einer Nachlaufzeit von beispielsweise von 5 Sekunden erfolgt.

Für die Darstellung der unterschiedlichen Funktionen, wie fahrzeugbezogene Funktionen, Radio- bzw. Audiobetrieb und darauf bezogene Daten, Telefon und dergleichen weist das Display zumindest zwei Darstellungsarten auf, von denen die erste Darstellungsart beispielsweise vier horizontale Darstellungsbereiche und die zweite Darstellungsart beispielsweise zwei Darstellungsbereiche aufweist. Die Darstellungsbereiche können horizontal oder vertikal verlaufen oder eine andere geeignete geometrische Anordnung und Form aufweisen. Dabei können in einem oberen horizontalen Darstellungsbereich, der in beiden Darstellungsarten identisch ist, autonome vom Bediensteller nicht beeinflussbare fahrzeugbezogene Daten wie beispielsweise Tempomat, Ganganzeige, Retarderbetrieb dargestellt werden. In dem darunter liegenden Darstellungsbereich der zweiten Darstellungsart werden die navigationsbezogenen Daten, welche von der Navigationseinrichtung kommen, dargestellt. Das Display ist so bemessen, dass für die navigationsbezogenen Daten genügend Darstellungsraum vorgesehen ist. Die navigationsbezogenen Daten können in einem ein- oder zweidimensionalen Dialogmenü am Display dargestellt werden. Die Navigationseinrichtung stellt die komplette Navigationsinformation für die Displayanzeige zur Verfügung.

Für den Dialog besitzt der Bediensteller vorzugsweise einen Drehsteller, bei dem durch Links- oder Rechtsdrehung der Cursor im Dialogmenü der navigationsbezogenen Daten bewegt werden kann. Bei einem eindimensionalen Dialogmenü kann durch Links- oder Rechtsdrehung des Drehstellers eine Aufwärts- oder Abwärtsbewegung des Cursors bewirkt werden. Bei einem zweidimensionalen Dialogmenü kann durch die Links- oder Rechtsdrehung des Drehstellers eine horizontale Cursorbewegung in einer jeweiligen Menüzeile bewirkt werden. Eine Abwärtsbewegung des Cursors vom Zeilenende zum Anfang der nächstfolgenden Zeile kann durch jeweiliges Weiterdrehen des Drehstellers bewirkt werden. Ebenfalls kann eine Aufwärtsbewegung des Cursors vom Zeilenanfang zum Zeilenende einer darüberliegenden Zeile durch entsprechendes Weiterdrehen des Cursors bewirkt werden. Angewählte Funktionen können durch Druck des Cursors bestätigt werden. Der Cursor stellt eine Auswahlmarkierung dar, mit welcher der angewählte Menüeintrag kenntlich gemacht wird. Der Cursor kann in bekannter Weise ausgebildet sein. Vorzugsweise ist die Cursorstellung bzw. die Auswahlmarkierung durch invertierte Darstellung des angewählten Menüeintrags kenntlich gemacht.

Die Erfindung kommt vorzugsweise bei Nutzfahrzeugen, wie Lastkraftwagen oder Omnibussen zum Einsatz. Das Display für die zentrale Anzeige der Daten, insbesondere Navigationsdaten befindet sich vorzugsweise zwischen einer Anzeigeeinrichtung für die Motordrehzahl und eine Anzeigeeinrichtung für die Fahrzeuggeschwindigkeit am Armaturenbrett des Fahrzeugs.

Der Bediensteller mit dem Drehsteller und gegebenenfalls zusätzliche Tastschalter zur Anwahl verschiedener Funktionen, wie die Wiedergabe fahrzeugbezogener Daten, Telefonat, Radio- bzw. Audiobetrieb befindet sich in bequemer Reichweite des Fahrers, ebenfalls vorzugsweise am Armaturenbrett des Fahrzeugs. Es ist daher eine Bedienung bzw. ein Dialog mit dem Navigationssystem in bequemer Weise vom Fahrer durchführbar, unabhängig von der Anordnung des Navigationssystem im Fahrzeug.

Anhand der Figuren wird an einem Ausführungsbeispiel die Erfindung noch näher erläutert.

Es zeigt
- Fig. 1: ein Blockschaltbild eines Ausführungsbeispiels;
- Fig. 2: Darstellungsarten am Display des Ausführungsbeispiels;
- Fig. 3: ein Ausführungsbeispiel für eine Darstellungsform der Navigationsinformation am Display des Ausführungsbeispiels; und
- Fig. 4: ein Blockschaltbild zur Erläuterung des Zusammenwirkens von Bedienstelle, Display und Navigationseinrichtung.

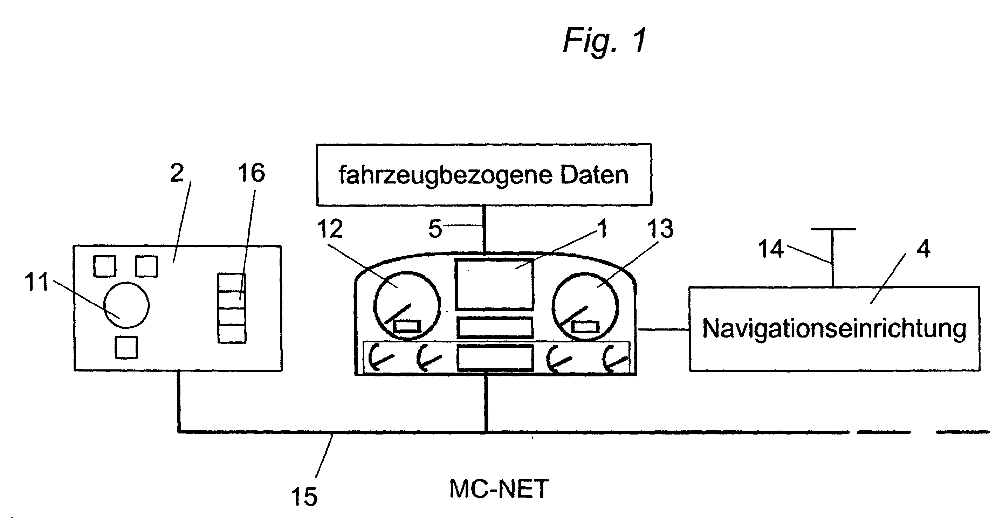

Die in Fig. 1 als Blockschaltbild dargestellte Vorrichtung dient zur zentralen Anzeige von Funktionen in einem Fahrzeug. Geräte und Einrichtungen sowie Sensoren, welche Daten zu den fahrzeugbezogenen Funktionen liefern, sind zu einem Netzwerk MC-NET mittels eines seriellen Datenbusses 15 verbunden. Zu diesem Netzwerk gehört beim Ausführungsbeispiel ein Display 1, welches im Fahrersichtfeld angeordnet ist. Das Display 1 befindet sich beim Ausführungsbeispiel zwischen einer Anzeigeeinrichtung 12 für die Motordrehzahl des Fahrzeugs und einer Anzeigeeinrichtung 13 für die Fahrzeuggeschwindigkeit. Das Display und diese Einrichtungen sind am Armaturenbrett des Fahrzeugs in Fahrtrichtung gesehen vor dem Lenkrad angeordnet. Sie liegen daher im unmittelbaren Gesichtsfeld des Fahrzeuglenkers. Die Geräte, Einrichtungen, Sensoren, welche die fahrzeugbezogenen Daten liefern, können auch über einen separaten Bus 5 an das Display 1 angeschlossen sein.

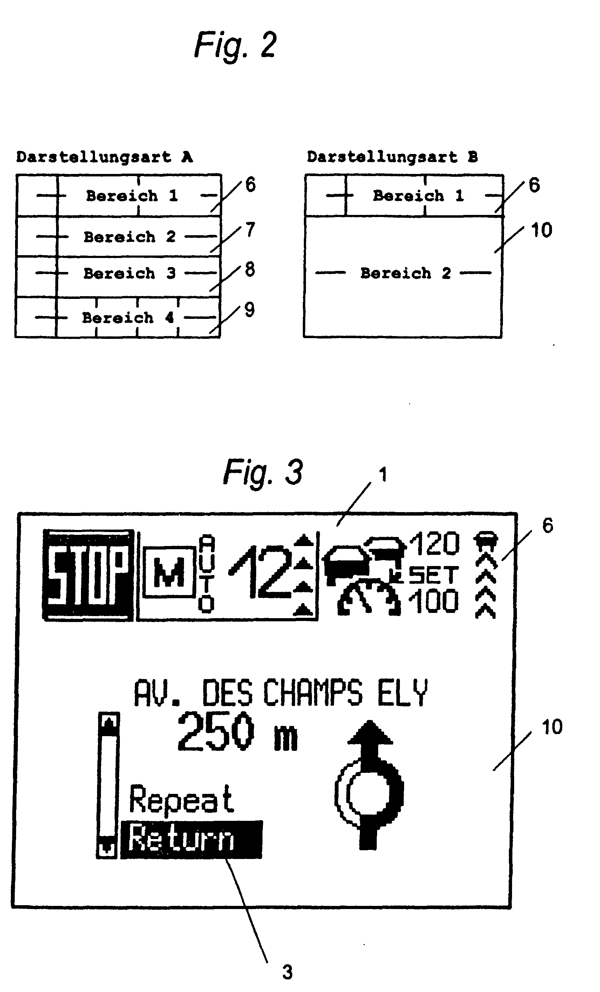

Ferner gehört zum Verbund, der durch das Netzwerk geschaffen ist, ein Bediensteller 2. Dieser befindet sich in bequemer Reichweite vom Fahrer und gewährleistet eine bequeme Auswahl und Aktivierung der vom Verbund über das Netzwerk zur Verfügung gestellten Funktionen, zu denen die relevanten Daten am Display 1 dargestellt werden. Am Display 1 ist ein Cursor 3 (Fig. 3) als Auswahlmarkierung vorgesehen, welcher durch den Bediensteller, insbesondere durch einen Drehsteller 11 zu den einzelnen Positionen der Menüeinträge, an denen die Daten im Menü dargestellt sind, bewegt werden kann.

Am Bediensteller 2 sind ferner Tastenschalter 16 in einer Spalte untereinander angeordnet. Mit Hilfe dieser Tastenschalter können wahlweise verschiedene Funktionen, insbesondere in Form von entsprechenden Dialogmenüs aufgerufen werden. Beispielsweise kann ein Dialogmenü über Betriebszustände von bestimmten Fahrzeugteilen, wie Restdicken an Bremsbelägen, Batteriespannungswerte und dergleichen aufgerufen und am Display 1 dargestellt werden. Ferner kann ein Radio- bzw. Audiobetrieb mit Kassettengerät und CD-Player angewählt und mit Hilfe des Bedienstellers bedient werden. Ferner kann ein Telefonbetrieb ausgewählt werden. Schließlich ist ein Tastenschalter für die Navigation vorgesehen. Im folgenden wird im einzelnen erläutert, wie beim Ausführungsbeispiel das Navigationssystem an den vom Netzwerk gebildeten Verbund angeschlossen ist. Für weitere Optionen können am Bediensteller noch weitere Tastenschalter vorgesehen sein.

Wie aus der Fig. 1 zu ersehen ist, wird eine an sich bekannte Navigationseinrichtung 4 an das Display 1 bzw. die aus Display und Bediensteller 2 bestehende Kombination angeschlossen.

Für den Betrieb der Navigationseinrichtung ist in bekannter Weise eine GPS-Antenne 14 vorgesehen, welche direkt an die Navigationseinrichtung 4 zum Empfang des GPS-Signals angeschlossen ist. Tachometer- und Fahrtrichtungssignale werden der Navigationseinrichtung 4 zugeleitet. Diese können als fahrzeugbezogene Daten von geeigneten im Fahrzeug vorgesehenen Messgebern geliefert werden.

Um die Daten der verschiedenen mittels der Tastenschalter 16 anwählbaren Funktionen in Form von Dialogmenüs darstellen zu können, sind mehrere Darstellungsarten, insbesondere zwei Darstellungsarten, welche in Fig. 2 gezeigt sind, am Display 1 möglich. Die in der Fig. 2 beispielsweise dargestellte Darstellungsart A beinhaltet vier Darstellungsbereiche 6, 7, 8 und 9. Diese Darstellungsbereiche sind untereinander angeordnet und erstrecken sich horizontal am Display 1. Bei der Darstellungsart B sind zwei Darstellungsbereiche 6 und 10 vorgesehen. Der oben liegende Darstellungsbereich 6 entspricht dem Darstellungsbereich 6 in der Darstellungsart A und der unten liegende Darstellungsbereich 10 entspricht den Darstellungsbereichen 7, 8 und 9 in der Darstellungsart A. Im Darstellungsbereich 6 beider Darstellungsarten A und B werden autonome, vom Netzwerk bzw. Bediensteller 2 nicht beeinflussbare fahrzeugbezogene Funktionen wie Stop-Kennzeichnung, Dauerbremsanzeige, Retarderstufenwahl, Ganganzeige und dergleichen dargestellt. In der Darstellungsart A können in den Darstellungsbereichen 7, 8 und 9 je nach aufgerufenem Dialogmenü fahrzeugbezogene Daten, welche über den Bediensteller 2 beeinflussbar sind, dargestellt werden. Ferner ist es möglich, auf Radio- bzw. Audiobetrieb bezogene Daten in den Bereichen 7, 8 und 9 darzustellen und entsprechende Steuerbefehle vom Bediensteller für diesen Betrieb abzugeben.

Das Display 1 beinhaltet eine Anzeigesteuereinrichtung in Form eines Rechners, welche die Displayanzeigesteuerung durchführt. Die Anzeigesteuereinrichtung gibt die vom Bediensteller, insbesondere Drehsteller 11 kommenden Anweisungen an die Navigationseinrichtung 4 weiter. Die Änderung wird in der Navigationseinrichtung 4 in eine komplette Darstellung der Navigationsinformation generiert. Diese komplette Navigationsinformation wird direkt in den dafür vorgesehenen Darstellungsraum am Display 1 wiedergegeben.
Die Anzeigesteuereinrichtung wird somit nicht für das Generieren der Navigationsinformation benutzt, sondern nur informiert, dass eine Navigationsanfrage erfolgt ist.

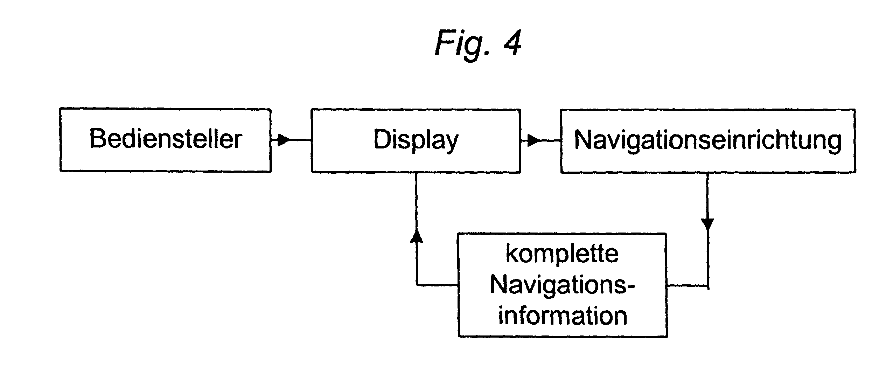

In Fig. 4 ist in einem Blockschaltbild dieser Betriebsablauf verdeutlicht.

Beim Aufruf der Funktion Navigation durch den entsprechenden Tastenschalter 16 erfolgt eine im Darstellungsbereich zentrierte Darstellung der Navigationsinformation am Display 1, wie es aus Fig. 3 zu ersehen ist. Im darüberliegenden Darstellungsbereich 6 befinden sich die autonomen fahrzeugbezogenen Daten und Informationen, wie bei der Darstellungsart A. In der Fig. 3 ist im Darstellungsbereich 10 als Navigationsinformation eine Zielführung dargestellt. In einer obenliegenden Zeile befindet sich ein Name der Strasse, in welche abgebogen werden soll. Darunter befindet sich die Entfernung zur Wegkreuzung in Metern. Rechts unten ist eine schematische Darstellung der Wegkreuzung mit Abbiegepfeil dargestellt. Links unten sind ausgewählte Menüeinträge "Repeat" und "Return" vorgesehen. Der Cursor 3 befindet sich beim Menüeintrag "Return" und ist durch die invertierte Darstellung dieses Wortes gekennzeichnet. Diese Navigationsinformation wird der Navigationseinrichtung komplett zur Verfügung gestellt bzw. geliefert.

Sobald das Navigations-Dialogmenü am Display 1 dargestellt ist, werden alle für die Navigation relevanten Eingabemöglichkeiten, wie Rechts-/Linksdrehung" des Drehstellers 11 und Bestätigung durch Druck des Bedienstellers 11 ausgefiltert und an die Navigationseinrichtung 4 weitergeleitet. Dies hat zur Folge, dass während der Einblendung des Navigations-Dialogmenüs die Funktionalität des Bedienstellers 2 nur noch eingeschränkt auf die Navigation nutzbar ist. Eine Rechts- oder Linksdrehung des Drehstellers 11 wird sofort an den Navigationseinrichtung weitergereicht. Der Drehsteller 11 kann dann für diese Zeit nicht mehr zur Einstellung anderer Funktionen, beispielsweise zur Betätigung des Radio- bzw. Audiobetriebes genutzt werden. Hierzu ist der Wechsel auf das entsprechende Dialogmenü oder die Beendigung des Navigationsbetriebes erforderlich.

Beim dargestellten Ausführungsbeispiel ersetzt der Drehsteller 11 die Funktionen eines Schaltkreuzes einer herkömmlichen Navigationseinrichtungs-Fernbedienung. Durch die Links-/Rechts-Drehung des Drehstellers 11 erreicht man eine eindimensionale Bewegung des Cursors 3 im Dialogmenü der Navigationseinrichtung 4, wie es beispielsweise in Fig. 3 dargestellt ist. Da die anwählbaren Menüeinträge in den meisten Fällen untereinander aufgelistet sind, entspricht die Links-/Rechtsdrehung des Drehstellers 11 einer Abwärts-/Aufwärts-Bewegung des Cursors 3 im Dialogmenü. In einem zweidimensionalen Dialogmenü, beispielsweise bei der alphabetischen Auswahl von Orten oder Strassen entspricht eine Rechts-/Linksdrehung einer Rechts-/Linksbewegung des Cursors in horizontaler Richtung im Dialogmenü. Die Abwärts-/Aufwärts-Bewegung des Cursors wird dadurch erreicht, dass bei Erreichen eines Zeilenendes oder eines Zeilenanfanges die Auswahl der nächst tieferen bzw. nächst höheren Zeile am jeweils entgegengesetzten Ende der Zeile fortgesetzt wird. Wenn der Cursor beispielsweise das Ende einer Zeile durch Rechts-Drehung des Drehstellers 11 erreicht hat, wird durch weitere Rechtsdrehung des Drehstellers 11 der Cursor zum Anfang der nächstfolgenden Zeile abwärts bewegt. Wenn der Cursor 3 am Zeilenanfang einer Zeile sich befindet, wird er durch Links-Drehung des Drehstellers 11 zum Ende der darüberliegenden Zeile aufwärts bewegt. Der Drehsteller 11 ist vorzugsweise so ausgebildet, dass er durch Drehschritte in aufeinanderfolgende Drehwinkelpositionen (Drehwinkelinkremente) bewegbar ist. Jeder Drehwinkelschritt entspricht dem Übergang von einem Menüeintrag in den nächstfolgenden Menüeintrag in der oben erläuterten Reihenfolge in Abhängigkeit von der Drehrichtung.

Durch Druck auf den Drehsteller 11 kann ein in der Navigationseinrichtung 4 über das Dialogmenü angewählter Menüeintrag bestätigt werden und die dem Menüeintrag entsprechende Funktion aktiviert werden.

Die im Display 1 für den Benutzer dargestellten Navigationshinweise können gleichzeitig auch verbal durch Sprachausgabe über einen Lautsprecher 15 vermittelt werden. Anstelle eines separaten Lautsprechers kann auch über das im Fahrzeug eingebaute Radio- bzw. Audiogerät die verbale Information vermittelt werden. Die Sprachausgabe kann in unterschiedlichen Sprachen erfolgen.

Wenn zur Berücksichtigung von Sicherheitsaspekten vom Betrieb des Fahrzeugs verursachte Meldungen insbesondere in Form von Hinweisen oder Warnungen kommen, werden diese betriebsnotwendigen Meldungen autonom sofort am Display 1 dargestellt. Hierzu wird die am Display 1 vorhandene Navigationsinformation weggeblendet. Der Navigationsbetrieb läuft unbeeinflusst hiervon in der Navigationseinrichtung 4 weiter. Die Darstellung der aktuellen Navigationsinformation kann durch Druck auf den zugeordneten Tastenschalter 16 wiederhergestellt werden.

## Patentansprüche

1. Vorrichtung zur zentralen Anzeige von Funktionen in einem Fahrzeug, wobei diese Funktionen neben fahrzeugbezogenen Funktionen die Funktion Navigation enthält, mit einem im Fahrersichtfeld angeordneten Display (1), an welchem zu den Funktionen gehörige Daten darstellbar sind, einem am Display (1) beweglichen Cursor (3) und einem vom Fahrer betätigbaren Bediensteller (2), mit welchem die am Display (1) dargestellten Daten durch entsprechende Bewegung des Cursors (3) anwählbar sind, wobei die Navigationseinrichtung (4) an das Display (1) und den Bediensteller (2) angeschlossen ist und mittels des Bedienstellers (2) bedienbar ist, und durch den Betriebsstrom des Kraftfahrzeugs ein- und ausschaltbar ist, **dadurch gekennzeichnet, dass** beim Ausschalten des Betriebsstroms die Ausschaltung der Navigationseinrichtung (4) nach einer Nachlaufzeit für eine Datensicherung erfolgt.

2. Vorrichtung nach Anspruch 1, **dadurch gekennzeichnet, dass** in einem für die Displayanzeigesteuerung zuständigen Rechner oder gleichwertigen Rechner (Anzeigesteuerung) zumindest zwei Darstellungsarten, von denen die eine Darstellungsart Darstellungsbereiche (7, 8, 9) für fahrzeugbezogene Daten und/oder andere im Fahrzeug eingebaute Geräte, insbesondere Radiogerät, aufweist und die andere Darstellungsart zumindest einen Darstellungsbereich (10) für die von der Navigationseinrichtung gelieferte Information enthält.

3. Vorrichtung nach Anspruch 2, **dadurch gekennzeichnet, dass** das Aufzeigen der Navigationsinformation in einem Darstellungsbereich (10) der zweiten Darstellungsart erfolgt, welcher am Display (1) etwa den Raum einnimmt, der in der ersten Darstellungsart die Darstellungsbereiche (7, 8, 9), in welchen die fahrzeug- und/oder gerätebezogenen Informationen angeordnet sind, einnimmt.

4. Vorrichtung nach Anspruch 2 oder 3, **dadurch gekennzeichnet, dass** in beiden Darstellungsarten ein Darstellungsbereich (6) für autonome, vom Bediensteller nicht beeinflussbare fahrzeugbezogene Daten vorgesehen ist.

5. Vorrichtung nach einem der Ansprüche 2 bis 4, **dadurch gekennzeichnet, dass** der ersten Darstellungsart drei Darstellungsbereiche (7, 8, 9) für anwählbare fahrzeugbezogene und/oder gerätebezogene, insbesondere auf Radio- bzw. Audiobetrieb bezogene Daten bzw. Funktionen aufweist.

6. Vorrichtung nach einem der Ansprüche 1 bis 5, **dadurch gekennzeichnet, dass** die navigationsbezogenen Daten, welche von der Navigationseinrichtung (4) generiert sind, in einem ein- oder zweidimensionalem Dialogmenü am Display (1) dargestellt sind.

7. Vorrichtung nach Anspruch 6, **dadurch gekennzeichnet, dass** in einem eindimensionalen Dialogmenü die Bewegung des Cursors (3) durch Links- bzw. Rechtsdrehung eines am Bediensteller (2) vorgesehenen Drehstellers (11) gesteuert ist.

8. Vorrichtung nach Anspruch 6, **dadurch gekennzeichnet, dass** in einem zweidimensionalen Dialogmenü die horizontale Cursorbewegung in einer jeweiligen Menüzeile durch Links- oder Rechts-Drehung des Drehstellers (11) und die Abwärtsbewegung des Cursors (3) von einem Zeilenende zur nächstfolgenden Zeile sowie die Aufwärtsbewegung des Cursors (3) von einem Zeilenanfang zur vorherigen Zeile durch jeweiliges Weiterdrehen des Drehstellers (11) in der entsprechenden Drehrichtung gesteuert ist.

9. Vorrichtung nach Anspruch 7 oder 8, **dadurch gekennzeichnet, dass** der Drehsteller (11) zur Betätigung einer angewählten Funktion durch Druck betätigbar ist.

10. Vorrichtung nach einem der Ansprüche 1 bis 9, **dadurch gekennzeichnet, dass** am Bediensteller (2) weitere Tastenschalter (16) zum Aufrufen von weiteren Dialogmenüs für Radio- bzw. Audiobetrieb, Fahrzeugdaten und Telefon vorgesehen sind.

11. Vorrichtung nach einem der Ansprüche 1 bis 10, **dadurch gekennzeichnet, dass** das Display (1) zwischen einer Anzeigeeinrichtung (12) für die Motordrehzahl und einer Anzeigeeinrichtung (13) für die Fahrzeuggeschwindigkeit am Armaturenbrett des Fahrzeugs angeordnet ist.

12. Vorrichtung nach einem der Ansprüche 1 bis 11, **dadurch gekennzeichnet, dass** bei einer autonomen vom Betrieb des Fahrzeugs verursachten Meldung (Hinweis, Warnung) die dargestellte Navigationsinformation für die Darstellung der Meldung ausgeblendet ist.

13. Vorrichtung nach Anspruch 12, **dadurch gekennzeichnet, dass** bei ausgeblendeter Navigationsinformation der Navigationsbetrieb der Navigationseinrichtung (4) unbeeinflusst weiterläuft.

14. Vorrichtung nach Anspruch 12 oder 13, **dadurch gekennzeichnet, dass** durch Betätigung eines Tastenschalters (16) am Bediensteller die Navigationsdarstellung am Display (1) wiederherstellbar ist.

## Claims

1. Device for the central display of functions in a vehicle, which functions include vehicle-related functions and the navigation function, with a display (1) which is arranged in the driver's field of vision and in which data associated to said functions can be indicated, a cursor (3) which can be moved about the display (1) and an operating element (2) with which the data shown on the display (1) can be selected by moving the cursor (3) correspondingly, whereby the navigation unit (4) is connected to the display (1) and the operating element (2), can be operated by means of the operating element (2) and can be switched on and off by means of the operating current of the motor vehicle, **characterised in that** when the operating current is switched off the navigation unit (4) is switched off after an after-running period for data-saving purposes.

2. Device according to Claim 1, **characterised in that** in a computer allocated to controlling the display indication or in a similar computer (display control) at least two modes of presentation are provided, of which the one presentation mode comprises the presentation fields (7, 8, 9) for vehicle-related data and/or for other units installed in the vehicle, particularly for a radio set, and the other presentation mode includes at least one presentation field (10) for the information supplied from the navigation unit.

3. Device according to Claim 2, **characterised in that** navigation information is indicated in a presentation field (10) of the second mode of presentation, which field occupies in the display (1) approximately that space which in the first presentation mode is taken up by the presentation fields (7, 8, 9) in which the vehicle- and/or unit-related information is arranged.

4. Device according to Claim 2 or 3, **characterised in that** in both presentation modes a presentation field (6) is provided for autonomous, vehicle-related data which cannot be influenced by the operating element.

5. Device according to Claims 2 to 4, **characterised in that** the first presentation mode has three presentation fields (7, 8, 9) for selectable data or functions related to the vehicle and/or units, particularly to the operation of radio and/or audio equipment.

6. Device according to one of the Claims 1 to 5, **characterised in that** the navigation-related data generated by the navigation unit (4) are presented in a one- or two-dimensional dialogue menu on the display (1).

7. Device according to Claim 6, **characterised in that** in a one-dimensional dialogue menu the movement of the cursor (3) is controlled by turning the rotary actuator (11) provided on the operating element (2) to the left or right.

8. Device according to Claim 6, **characterised in that** in a two-dimensional dialogue menu the horizontal cursor movement in the respective menu line is controlled by turning the rotary actuator (11) to the left or right and the downward movement of the cursor (3) from the end of one line to the next line and the upward movement of the cursor (3) from the start of one line to the previous line are controlled by continued turning of the rotary actuator (11) in the respective direction.

9. Device according to Claim 7 or 8, **characterised in that** the rotary actuator (11) can be press-actuated for actuating a selected function.

10. Device according to one of the Claims 1 to 9, **characterised in that** further tip switches (16) are provided on the operating element (2) for calling up further dialogue menus for radio and audio operation, vehicle data and telephone equipment.

11. Device according to one of the Claims 1 to 10, **characterised in that** the display (1) is arranged on the vehicle's instrument panel between an indicator unit (12) for the engine speed and an indicator unit (13) for the vehicle speed.

12. Device according to one of the Claims 1 to 11, **characterised in that** in the event of an autonomous message (note, warning) prompted by the operation of the vehicle, the on-screen navigation information is cut out for the indication of said message.

13. Device according to Claim 12, **characterised in that** if the navigation information is cut out the navigation operation of the navigation unit (4) continues to run uninfluenced.

14. Device according to Claim 12 or 13, **characterised in that** the navigation presentation on the display (1) can be restored by actuating a tip switch (16) on the operating element.

## Revendications

1. Dispositif d'affichage centralisé de fonctions dans un véhicule, auquel cas ces fonctions contiennent, en plus des fonctions relatives au véhicule, la fonction navigation, avec un écran (1) disposé dans le champ de vision du chauffeur, sur lequel des données correspondantes aux fonctions peuvent être représentées, avec un curseur (3) mobile sur l'écran (1) et une console de commande (2) activable par le chauffeur avec laquelle les données représentées sur l'écran (1) peuvent être sélectionnées par le déplacement correspondant du curseur (3), auquel cas le dispositif de navigation est relié à l'écran (1) et à la console de commande (2) et peut être commandé au moyen de la console de commande (2) et mis sous/hors tension par le courant de service du véhicule à moteur, **caractérisé par le fait que**, lors de la mise hors tension du courant de service, la mise hors tension du dispositif de navigation a lieu après un temps de postfonctionnement pour garantir la sauvegarde des données.

2. Dispositif selon la revendication 1, **caractérisé par le fait que**, dans un ordinateur responsable de la commande de l'affichage sur l'écran ou un ordinateur similaire (commande d'affichage), au minimum deux types de représentation sont possibles, parmi lesquels un type de représentation présente des zones de représentation (7, 8, 9) pour les données relatives au véhicule et/ou d'autres appareils montés dans le véhicule, en particulier un appareil de radio, et l'autre type de représentation contient au minimum une zone de représentation (10) pour les informations fournies par le dispositif de navigation.

3. Dispositif selon la revendication 2, **caractérisé par le fait que** les informations de navigation sont affichées dans une zone de représentation (10) du deuxième type de représentation lequel accorde sur l'écran un peu d'espace qui accueille, dans le premier type de représentation, les zones de représentation (7, 8, 9) sur lesquelles sont disposées les informations relatives au véhicule et/ou aux appareils.

4. Dispositif selon la revendication 2 ou 3, **caractérisé par le fait que**, dans les deux types de représentation, une zone de représentation (6) est prévue pour afficher des données autonomes, relatives au véhicule et non influençables.

5. Dispositif selon une des revendications 2 à 4, **caractérisé par le fait que** le premier type de représentation présente trois zones de représentation (7, 8, 9) pour afficher des données ou des fonctions sélectionnables, relatives au véhicule et/ou aux appareils, en particulier relatives à un appareil de radio ou système de sonorisation.

6. Dispositif selon une des revendications 1 à 5, **caractérisé par le fait que** les données rotatives à la navigation générées par le dispositif de navigation (4) sont représentées sur l'écran (1) dans un menu de dialogue en une ou deux dimensions.

7. Dispositif selon la revendication 6, **caractérisé par le fait que**, dans un menu de dialogue en une dimension, le déplacement du curseur (3) est commandé par la rotation vers la gauche ou vers la droite d'un commutateur rotatif (11) prévu sur la console de commande (2).

8. Dispositif selon la revendication 6, **caractérisé par le fait que**, dans un menu de dialogue en deux dimensions, le déplacement horizontal du curseur sur chaque ligne du menu est commandé par la rotation vers la gauche ou vers la droite du commutateur rotatif (11) et le déplacement du curseur (3) vers le bas d'une fin de ligne à la ligne suivante ainsi que le déplacement du curseur (3) vers le haut du début d'une ligne à la ligne précédente est commandé par la poursuite de la rotation du commutateur rotatif (11) dans le sens de rotation correspondant.

9. Dispositif selon la revendication 7 ou 8, **caractérisé par le fait que** le commutateur rotatif (11) est activable par pression pour activer une fonction sélectionnée.

10. Dispositif selon une des revendications 1 à 9, **caractérisé par le fait que** des contacteurs à touche (16) supplémentaires sont prévus sur la console de commande (2) pour appeler d'autres menus de dialogue pour faire fonctionner la radio ou le système de sonorisation, pour les données relatives au véhicule et le téléphone.

11. Dispositif selon une des revendications 1 à 10, **caractérisé par le fait que** l'écran (1) est disposé entre un dispositif d'affichage (12) du régime moteur et un dispositif d'affichage (13) de la vitesse du véhicule sur le tableau de bord du véhicule.

12. Dispositif selon une des revendications 1 à 11, **caractérisé par le fait que**, lors de l'affichage d'un message (indication, avertissement) autonome occasionné par le fonctionnement du véhicule, les informations de navigation représentées sont masquées pour représenter le message.

13. Dispositif selon la revendication 12, **caractérisé par le fait que**, lorsque les informations de navigation sont masquées, le système de navigation du dispositif (4) continue à fonctionner sans être influencé.

14. Dispositif selon la revendication 12 ou 13, **caractérisé par le fait qu'**en pressant un contacteur à touche (16) sur la console de commande, la représentation de navigation est rétablie sur l'écran (1).
